(19) Europäisches Patentamt
European Patent Office
Office européen des brevets

(11) Numéro de publication: **0 182 426**
**B1**

# (12) FASCICULE DE BREVET EUROPÉEN

(45) Date de publication du fascicule du brevet: **07.02.90**

(51) Int. Cl. ⁵: **H 04 N 5/445**, H 04 N 9/64

(21) Numéro de dépôt: **85201822.5**

(22) Date de dépôt: **08.11.85**

(54) **Circuit pour la commutation de sources video.**

(30) Priorité: **20.11.84 FR 8417670**

(43) Date de publication de la demande:
**28.05.86 Bulletin 86/22**

(45) Mention de la délivrance du brevet:
**07.02.90 Bulletin 90/06**

(84) Etats contractants désignés:
**DE FR GB**

(56) Documents cité:
**EP-A-0 046 108**
**US-A-4 460 918**

(73) Titulaire: **LA RADIOTECHNIQUE PORTENSEIGNE**
**51, Rue Carnot**
**F-92150 Suresnes (FR)**
(84) Etats contractants désignés: **FR**

(73) Titulaire: **N.V. Philips' Gloeilampenfabrieken**
**Groenewoudseweg 1**
**NL-5621 BA Eindhoven (NL)**
(84) Etats contractants désignés: **DE GB**

(72) Inventeur: **Taupin, Dominique**
**Société Civile S.P.I.D. 209, rue de l'Université**
**F-75007 Paris (FR)**
Inventeur: **Vilard, Philippe**
**Société Civile S.P.I.D. 209, rue de l'Université**
**F-75007 Paris (FR)**

(74) Mandataire: **Caron, Jean**
**SOCIETE CIVILE S.P.I.D. 209, rue de l'Université**
**F-75007 Paris (FR)**

EP 0 182 426 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dipposition (Art. 99(1) Convention sur le brevet européen).

LIBERGRAF, STOCKHOLM 1990

## Description

L'invention concerne un circuit pour la commutation rapide, dans un téléviseur, d'une source vidéo principale interne, et d'au moins deux autres sources vidéo à connecter à un étage de traitement vidéo procédant à l'affichage d'une image, comportant au moins deux commutateurs dont le premier qui alimente directement l'étage de traitement vidéo est d'un type rapide à deux voies de commutation, la première voie recevant le signal en provenance de la source vidéo principale, et la seconde voie recevant le signal en provenance du deuxième commutateur, et dont la commutation est commandée au moyen de divers signaux de commande.

Le circuit selon l'invention s'applique à la sélection de sources pour constituer une image vidéo sur l'écran d'un téléviseur. En plus de la source principale interne que constitue la sortie de l'étage de démodulation du téléviseur lui-même, on peut brancher sur ce dernier des deuxièmes sources auxiliaires constituées par des appareils périphériques externes, notamment un magnétoscope, pour lesquels une prise spéciale dite de péritélévision est prévue, dont les bornes peuvent être connectées à l'étage de traitement vidéo du téléviseur au moyen de commutateurs.

Un circuit réalisant les commutations nécessaires est décrit dans la demande de brevet européen n° 0 046 108. Ce circuit utilise notamment, pour commander les commutateurs, un signal de commande appliqué sur une borne de la prise de péritélévision. En l'absence de ce signal, si aucune touche spéciale "audiovisuel" n'est enclenchée, les inverseurs sont placés de façon à sélectionner la source interne.

Il peut exister une ou plusieurs troisièmes sources. Des procédés de transmission de pages de magazines, par exemple celui connu sous le nom d'Antiope, fournissent une troisième source vidéo. De même des procédés de codage numérique permettent de transmettre par exemple des sous-titres.

Cette troisième source est généralement constituée par un décodeur qui constitue une source auxiliaire interne au téléviseur, source qui peut être sélectionnée indépendamment des deux autres. Il faut donc alors un commutateur à trois directions.

Deux sources peuvent être utilisées à la fois, pour produire une incrustation c'est-à-dire que des caractères alphanumériques provenant d'une source sont ajoutés dans une image provenant d'une autre source. Pour ce faire à des moments opportuns l'image principale est interrompue au cours du balayage de ligne pour être remplacée par un élément de caractère à afficher, et l'image se poursuit ensuite normalement jusqu'au caractère suivant.

Ceci nécessite des circuits de commutation très rapides, puisque par exemple un élément de caractère dont la largeur est le centième de la largeur totale d'image ne dure qu'environ 0,5 microseconde.

Des commutateurs électroniques rapides sont donc nécessaires.

Un tel commutateur électronique rapide à trois voies peut être réalisé au moyen de deux commutateurs rapides à deux voies montés en cascade. A chaque voie de ces commutateurs est associé un circuit d'alignement du niveau du noir pour que les niveaux de noir des différentes sources soient identiques.

Cet ensemble de commutation est relativement complexe et coûteux.

L'invention se propose de simplifier la réalisation d'une partie des commutateurs et d'en diminuer ainsi le prix. Elle est basée sur la remarque que la source externe (prise péritélévision) et la source auxiliaire interne ne sont pas utilisées ensemble, et que lorsque deux interrupteurs sont en série, le plus rapide des deux peut définir la vitesse de commutation de l'ensemble pourvu que le plus lent soit fermé avant et ouvert après. Ainsi l'invention propose d'utiliser un commutateur rapide commun à toutes les sources, et de sélectionner entre elles les sources auxiliaires au moyen d'un commutateur lent, beaucoup moins coûteux qu'un commutateur rapide. Il faut alors commander ce commutateur lent de manière particulière: le circuit selon l'invention est ainsi notamment remarquable en ce ce que le deuxième commutateur est d'un type à commutation lente à au moins deux voies, chacune recevant un signal en provenance d'une des autres sources vidéo, et en ce que sur le trajet de signal de commande de ce commutateur est disposé un circuit de temporisation qui maintient ledit signal pendant au moins une durée de trame.

Avantageusement le circuit de temporisation comporte un circuit analogique à résistance-capacité, qui permet une réalisation simple dans le cas où l'on utilise des composants discrets.

Avec des circuits intégrés standards, ou pour une réalisation entièrement intégrée, le circuit de temporisation comporte avantageusement un circuit logique, procédant à partir des impulsions de trame et du signal de commande destiné au commutateur lent, et qui maintient ledit signal de commande pendant au moins une durée de trame.

La description qui va suivre, en regard des dessins annexés décrivant des exemples non limitatifs fera bien comprendre comment l'invention peut être réalisée.

La figure 1 est un schéma partiel d'un téléviseur sur lequel est représenté le circuit selon l'invention.

La figure 2 représente un mode de réalisation particulier du bloc 9 de la figure 1.

La figure 3 représente un deuxième mode de réalisation de même bloc 9.

La figure 4 est un diagramme de signaux relevés dans le schéma de la figure 2.

La figure 5 représente un troisième mode de réalisation du bloc 9.

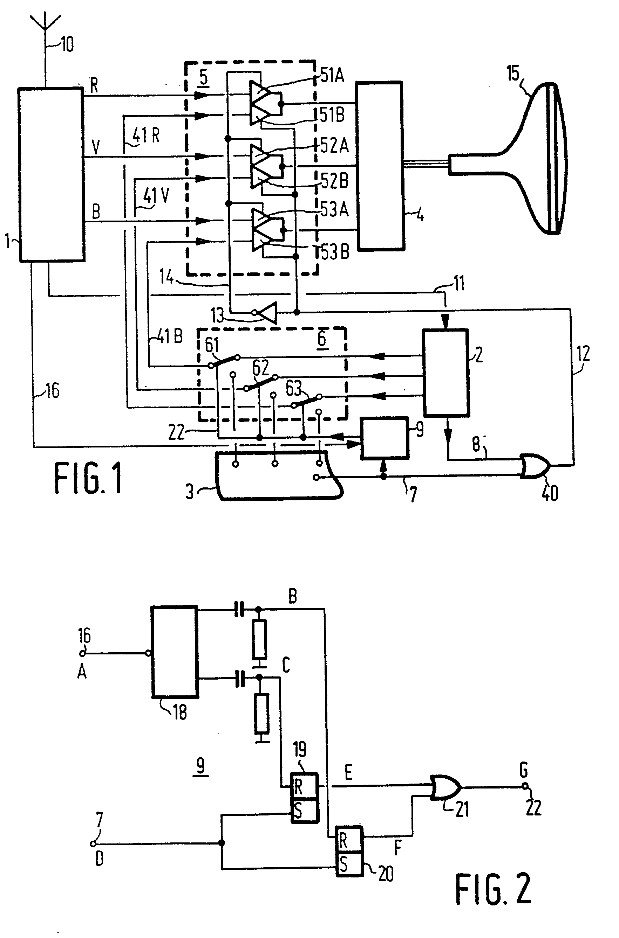

Sur la figure 1 une antenne 10 est connectée à un élément 1 de réception qui constitue une première source (principale, interne) et qui fournit trois composantes de couleur rouge, vert, bleu (R, V, B) d'une image.

Une prise de péritélévision 3 permet de connecter des deuxièmes sources (auxiliaires, externes, non représentées) telles que: magnétoscope, jeu vidéo, lecteur de disque vidéo, etc...

Un décodeur 2, qui reçoit via le conducteur 11 des signaux codés extraits du signal d'antenne, provenant de l'élément récepteur 1, constitue une troisième source d'image (auxiliaire, interne). Ce décodeur est par exemple un décodeur "Antiope" ou "Teletext".

Les images provenant de ces trois sources peuvent être connectées à un étage de traitement vidéo 4 procédant à l'affichage d'une image sur un écran cathodique 15.

Pour assurer l'acheminement et la sélection des images, le circuit comporte deux commutateurs en cascade. Un premier commutateur 5 relié directement à l'entrée de l'étage de traitement vidéo 4 sélectionne l'image parmi deux sources: soit la source principale interne 1, soit l'une quelconque des autres sources. Ce commutateur rapide, permettant l'incrustation, est réalisé au moyen de portes analogiques rapides 51A, 51B pour le canal rouge, 52A, 52B pour le canal vert, et 53A, 53B pour le canal bleu, constituant un commutateur triple à deux voies. Une seule porte par couleur est ouverte, par exemple celle référencée A pour sélectionner la source principale 1, tandis que l'autre est fermée (celle référencée B selon l'exemple donné). Cet effet est obtenu parceque les portes référencées B sont commandées ensemble par un signal amené par la connexion 12, cependant qu'un inverseur 13 produit le signal inverse, amené par la connexion 14 aux portes référencées A. Chacun des conducteurs R, V, B dans chacune des voies est relié à un circuit bien connu d'alignement du niveau du noir (non représenté pour ne pas alourdir la figure). En pratique cet ensemble de commutateurs et les circuits annexes sont habituellement inclus dans les circuits intégrés de décodage de couleur, tel par exemple le circuit TDA 3560 de la société PHILIPS. Dans la notice en langue anglaise de ce circuit, les blocs comprenant lesdits commutateurs sont indiqués par les mots "DATA INSERTION".

Un deuxième commutateur triple 6 est relié au premier par la liaison à trois fils 41R, 41V, 41B. La commutation en est commandée par un signal amené par la connexion 22. Ce commutateur permet la sélection entre l'image fournie par la source externe via la prise 3 et l'image fournie par le décodeur 2. Bien que ce commutateur soit représenté symboliquement par des barrettes 61, 62, 63 se déplaçant sur des plots, il s'agit d'un commutateur électronique.

Ce commutateur supplémentaire est avantageusement d'un type à commutation lente, c'est-à-dire qu'il peut être choisi parmi des circuits intégrés bon marché et à faible consommation, tels que les circuits MOS. Le circuit connu sous la référence HEF 4053 de la société PHILIPS, qui est un triple commutateur à deux voies, convient pour constituer le commutateur 6 bien que ses temps de commutation soient à priori trop grands pour permettre l'incrustation de caractères fins. Ceci est rendu possible parce que l'on dispose, dans le trajet du signal de commande de ce commutateur 6, un circuit de temporisation 9 qui maintient ledit signal pendant au moins une durée de trame.

Lorsqu'une image en provenance d'une source doit être présentée, un signal de commande apparaît au moins une fois par trame pendant un grand nombre de trames successives, de façon à assurer un temps de présentation suffisant pour être perçu par l'oeil humain. Si ce signal est maintenu pendant au moins une trame, c'est-à-dire jusqu'à ce qu'il apparaisse à nouveau dans la trame suivante, le signal résultant devient continu, tant qu'une image doit être présentée, et le commutateur lent est actionné une seule fois pendant la durée de présentation: il a donc tout le temps nécessaire pour se placer dans la position requise. Même s'il mettait plusieurs durées de trame pour prendre sa position, ceci ne serait pas gênant puisque l'information est répétée; la seule exigence de vitesse est que la position requise soit atteinte en un temps non décelable à l'oeil.

Seules les sources auxiliaires émettent un signal lorsqu'elles ont une image à présenter: en l'absence de tout signal, c'est la source principale interne qui est sélectionnée.

Le signal de commande provenant de la prise de péritélévision 3 est fourni sur la connexion 7; celui provenant du décodeur 2 est fourni sur la connexion 8. Ces deux connexions 7, 8 sont amenées à une porte OU 40 dont la sortie est reliée par la connexion 12 au commutateur 5. Si au moins une des sources 3 ou 2 est active, un signal haut sur la connexion 12 ouvre les portes 51B, 52B, 53B, et l'image provenant du commutateur 6 via les connexions 41 est amenée au circuit de traitement vidéo 4. Lorsqu'aucune des sources 2 ou 3 n'est active, le signal sur la connexion 12 est à l'état bas, les portes 51A, 52A, 53 sont ouvertes et l'image de la source principale 1 est amenée au circuit 4.

La figure 2 montre un circuit de temporisation 9 constitué d'un circuit logique qui maintient le signal de commande correspondant, celui de la connexion 7, pendant au moins une durée de trame. Ce circuit procède à partir des impulsion de trame amenées sur la borne 16 et du signal de commande sur la borne 7 (reliée à la connexion 7) de manière que lorsqu'un signal de commande bref a été détecté sur la borne 7 au moins une fois pendant une trame il est maintenu sur la connexion de sortie 22 jusqu'à la fin de la trame suivante.

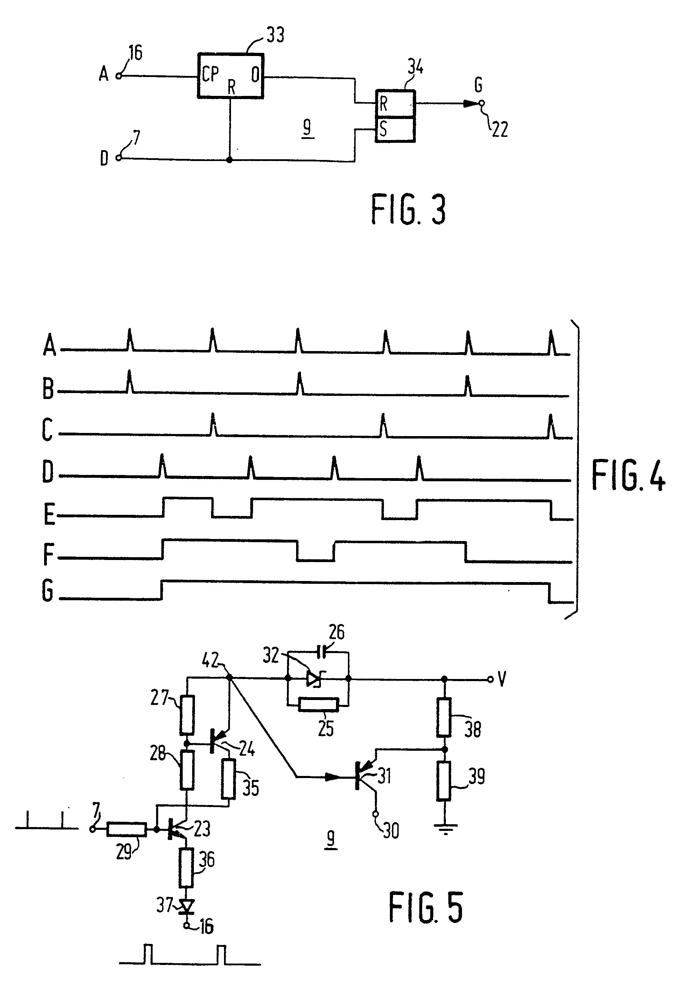

Les signaux dans ce montage sont représentés sur la figures 4, A à G. Le signal A est le signal de trame sur la borne 16. Chacune des impulsions fait basculer une bascule 18 (Eccles

Jordan ou maître-esclave) dont les deux sorties sont ainsi chacune à leur tour à l'état haut pendant une trame, puis à l'état bas pendant la trame suivante.

Les signaux de ces sorties sont différenciés dans un circuit à capacité-résistance et on trouve en B et C une impulsion pour deux retours de trame, tour à tour en B et en C. ( fig. 4, B et C). Ces impulsions B et C attaquent respectivement une entrée d'une bascule RS 20 et d'une bascule RS 19, l'autre entrée de chacune de ces bascules étant reliée à la borne 7 ou est amené le signal de commande représenté en 4, D. Ce signal est ici présent pendant quatre trames, pour illustrer le fonctionnement. Dans la réalité il serait présent pendant beaucoup plus de quatre trames. A la première apparition du signal les sorties E, F des bascules 19 et 20 passent en position haute. A l'apparition d'une impulsion C, la bascule 19 retombe à zéro (signal E). Elle remonte à 1 au signal de commande D suivant. Le signal trame suivant fait retomber la bascule 20 à zéro (signal F), et elle remonte au signal D suivant. Lorsque le signal D cesse d'arriver, la bascule 20 (signal F) retombe à zéro pour le signal B suivant, et la bascule 19 (signal E) pour le signal C suivant. Elles restent ensuite à zéro en permanence tant qu'il n'apparaît plus de signal D. Les sorties des deux bascules 19 et 20 sont ajoutées dans un circuit OU 21 pour former le signal de sortie G sur la borne 22. Ce signal de sortie passe à l'état haut au premier signal D et est maintenu pendant au moins une durée de trame après le dernier signal D.

Bien entendu on peut imaginer d'autres arrangements de circuits logiques procurant le même résultat. A titre d'exemple supplémentaire, la figure 3 illustre une de ces possibilités: le signal de trame est amené sur la borne 16 et actionne l'entrée CP d'un compteur 33 qui compte donc les trames. Ce compteur peut compter au moins jusqu'à deux, et lorsqu'il atteint son compte maximal, ici de deux, un signal apparaît sur sa sortie O de poids deux, sortie qui est reliée à une entrée d'une bascule R-S 34 pour la remettre à zéro. Le signal de commande D, sur la connexion 7, est amené à la borne R de remise à zéro du compteur 33 et à l'autre entrée de la bascule R-S 34 pour la remettre à l'état haut. En l'absence de signal D, au bout de deux trames la bascule est remise à zéro puis reste à zéro. Dès qu'apparaît un signal D, cette bascule passe à l'état haut et le compteur est remis à zéro. Tant qu'un signal D est présent au moins une fois par trame, le compteur est remis à zéro à chaque trame. Lorsque le signal D n'apparaît plus le compteur compte deux trames puis remet à zéro la bascule 34, on obtient donc le même effet qu'avec le montage de la figure 2.

La temporisation peut encore être obtenue par un circuit analogique, par exemple à base d'un circuit monostable bien connu actionné par l'impulsion de commande. Un circuit du même genre qui est particulièrement bien adapté est représenté par la figure 5. Ce circuit de temporisation 9 comporte un circuit analogique à constante de temps résistance-capacité 25, 26.

Il comporte en outre un ensemble semiconducteur à avalanche, ici constitué de deux transistors complémentaires 23, 24 dont le collecteur de l'un est relié par une résistance à la base de l'autre et réciproquement. Le signal positif de commande sur la connexion 7 est amené à la base du transistor NPN 23 et le rend conducteur, ce qui entraîne la conduction associée du transistor PNP 24 et l'ensemble reste ensuite conducteur jusqu'à ce qu'un signal positif de trame sur la borne 16 reliée à l'émetteur du transistor 23 vienne bloquer ce dernier et par la même occasion également le transistor 24 associé. Le montage est disposé en série avec un circuit à constante de temps 25, 26 dont la constante de temps est égale ou supérieure à une durée de trame. Le point 42 de liaison de l'émetteur du transistor 24 avec ledit circuit à constante de temps est relié à la base d'un transistor 31 dont l'émetteur est connecté à un pont diviseur 38, 39 fournissant une tension intermédiaire entre la tension d'alimentation V et la tension du point 42 lorsque l'ensemble à avalanche est conducteur. Cette dernière tension est fixée par une diode zener 32 branchée en parallèle sur le circuit résistance 25-capacité 26. Lorsque cet ensemble est traversé par un courant, le transistor 31 est donc conducteur et son courant de collecteur disponible sur la borne 30, commande le commutateur 6. On entend par constante de temps du circuit, le temps nécessaire, lors de la coupure des transistors 23, 24, pour que la tension au point 42 remonte suffisamment pour entraîner le blocage du transistor 31. C'est ce temps qui doit être supérieur ou égal à une durée de trame.

Une résistance 27 est branchée entre l'émetteur et la base du transistor 24 pour augmenter le courant de collecteur du transistor 23. Les résistances 29 et 36 en série dans le trajet de courant de base du transistor 23 ont un rôle limitateur de courant. La diode 37 en série dans l'émetteur du transistor 23 empêche le courant de s'inverser si l'impulsion de trame sur la borne 16 devient très positive.

Le circuit fonctionne de façon satisfaisante avec les valeurs suivantes:

| | | | |
|---|---|---|---|
| T23 | BC548 | R29 | 2,2K |
| T24 | BC558 | T31 | BC558 |
| R25 | 22K | R35 | 3,3K |
| C26 | 2,2 uF | R36 | 3,3K |
| | | D37 | 1N 4140 |
| R27 | 4,7K | R38 | 3,3K |
| R28 | 33K | R39 | 33K |

La constante de temps s'ajuste très facilement en jouant sur la tension de seuil du transistor 31, en modifiant par exemple, la résistance 39 dont la valeur n'est donnée qu'à titre indicatif. Il est à remarquer que la durée de temporisation n'est pas critique, pourvu qu'elle soit suffisamment longue. Dans le cas de la figure 3 elle peut aussi être obtenue par le comptage d'une fréquence autre que celle de trame, à condition de changer la capacité du compteur. En ce qui concerne le fonctionnement général du système, il faut noter que lorsque par exemple une image venant de la prise 3 doit être incrustée dans l'image principale, l'image venant de la prise 3 est en permanence sélectionnée par le commutateur 6 grâce au circuit de temporisation 9, mais un signal bref commandant l'incrustation parvient néanmoins sans temporisation depuis la connexion 7 via la porte 40 à l'interrupteur rapide 5, et c'est ce dernier qui réalise l'incrustation. Le système envisagé ci-dessus concerne la commutation dite rapide. C'est pourquoi il n'a pas été envisagé de commutation du son, puisque cette dernière n'est pas concernée par la commutation rapide. Ces deux commutations posent en effet des problèmes distincts, à tel point que le signal de commutation "lente" jouant également sur le son apparaît sur la broche 8 de la prise de péritélévision alors que le signal de commutation "rapide" ici utilisé apparaît sur la broche 16. (ces références 8, 16 concernent la prise normalisée et non les figures annexées à la présente description).

Le montage ci-dessus peut être facilement modifié pour être utilisé si l'on a plus de deux sources auxiliaires à commuter. Pour sélectionner par exemple quatre sources en plus de la source principale soit deux sources de plus que dans l'exemple illustré ci-dessus, il est possible d'utiliser pour le commutateur 6 des circuits du type HEP 4052 qui sont des doubles commutateurs à quatre voies. Comme il y a trois canaux de couleur, il faut utiliser un circuit et demi, car chacun ne comporte qu'un double commutateur. La porte 40 de la figure 1 aurait alors quatre entrées, car il y aurait quatre signaux de commande distincts, et trois de ces signaux devraient traverser chacun un circuit de temporisation. En prenant comme exemple le circuit de la figure 3, le compteur de trames 33 pourrait être commun, son entrée de remise à zéro étant alors attaquée par une porte OU dont chacune des entrées serait reliée à l'un des trois susdits signaux de commande. Il y aurait trois bascules R-S 34, chacune ayant son entrée S reliée à un signal de commande, et toutes les entrées R de ces bascules 34 seraient reliées ensemble à la sortie 0 du compteur 33. La sortie à l'état haut d'une des trois bascules R-S indiquerait que la voie correspondante doit être sélectionnée par le commutateur 5 à quatre voies, la quatrième voie étant choisie lorsque les trois bascules sont ensemble à l'état bas. On peut facilement prévoir en outre pour les trois sources en question un système logique de priorités qui améliore le fonctionnement du dispositif, au cas ou plusieurs sources seraient actives simultanément.

**Revendications**

1. Circuit pour la commutation rapide, dans un téléviseur, d'une source vidéo principale interne (1) et d'au moins deux autres sources vidéo (2, 3) à connecter à un étage (4) de traitement vidéo procédant à l'affichage d'une image, comportant au moins deux commutateurs dont le premier (5) qui alimente directement l'étage (4) de traitement vidéo est d'un type rapide à deux voies de commutation, la première voie recevant le signal en provenance de la source vidéo principale (1), et la seconde voie recevant le signal en provenance du deuxième commutateur (6), et dont la commutation est commandée au moyen de divers signaux de commande, caractérisé en ce que le deuxième commutateur (6) est d'un type à commutation lente à au moins deux voies, chacune recevant un signal en provenance d'une des autres sources vidéo (2, 3), et en ce que sur le trajet de signal de commande de ce commutateur est disposé un circuit (9) de temporisation qui maintient ledit signal pendant au moins une durée de trame.

2. Circuit selon la revendication 1, caractérisé en ce que la connection à l'étage de traitement vidéo (4) se fait au moyen de liaisons à trois fils "rouge, vert, bleu" et en ce que chaque commutateur est triple.

3. Circuit selon l'une des revendications 1 ou 2, caractérisé en ce que le circuit de temporisation comporte un circuit analogique à constante de temps résistance-capacité (25, 26).

4. Circuit selon la revendication 3, caractérisé en ce que le circuit de temporisation comporte un ensemble semiconducteur à avalanche (23, 24) dont la conduction est entrainée par le signal de commande (7) et stoppée par un signal (16) de trame, disposé en série avec un circuit à constante de temps (25, 26) dont la constante de temps est égale ou supérieure à une durée de trame.

5. Circuit selon l'une des revendications 1 ou 2, caractérisé en ce que le circuit de temporisation comporte un circuit logique (33, 34 ou 18 – 20) qui maintient le signal de commande correspondant pendant au moins une durée de trame.

6. Circuit selon la revendication 5, caractérisé en ce que le circuit logique (33, 34 ou 18 - 20) procède à partir des impulsions de trame (16) et dudit signal de commande (7) correspondant, de manière telle que lorsqu'un signal de commande bref a été détecté au moins une fois pendant une trame, il est maintenu jusqu'à la fin de la trame suivante.

7. Circuit selon la revendication 6, caractérisé en ce que le circuit logique comporte un diviseur par deux (18) de la fréquence de trame qui fournit un signal de trame alternativement sur une première sortie et sur une seconde sortie, en ce que ces deux sorties sont reliées chacune à une entrée d'une bascule R-S (19, 20) dont l'autre entrée est reliée au signal de commande (7), les sorties de ces bascules R-S étant reliées chacune à une entrée d'une porte logique (21) dont la sortie fournit le signal de commande à l'inverseur lent.

8. Circuit selon la revendication 6 caractérisé en ce que le circuit logique comporte un compteur (33) des impulsions de trame, remis à zéro par le signal de commande (7), et une bascule R-S (34) dont une entrée est reliée à la sortie de poids au moins deux du compteur et l'autre entrée est actionnée par le signal de commande.

**Patentansprüche**

1. Schaltkreis zum in einem Fernseher schnellen Umschalten zwischen einer inneren Haupt-Video-Quelle (1) und mindestens zwei weiteren Video-Quellen (2, 3), zum Verbinden mit einer Video-Verarbeitungsstufe (4), die an einem Wiedergabeteil ein Bild liefert, wobei dieser Schaltkreis mindestens zwei Schalter aufweist, von denen der erste (5), der die Video-Verarbeitungsstufe (4) unmittelbar speist, von einem schnellen Typ mit zwei Schaltkanälen ist, wobei der erste Kanal das von der Haupt-Video-Quelle (1) herrührende Signal erhält, und der zweite Kanal das von dem zweiten Schalter (6) herrührende Signal erhält, wobei der Schaltvorgang mittels mehrerer Schaltsignale gesteuert wird, *dadurch gekennzeichnet*, daß der zweite Schalter (6) von einem langsamen Schalttyp mit mindestens zwei Kanälen ist, die je ein Signal erhalten, das von den anderen Video-Quellen (2, 3) herrührt, und daß in der Strecke des Steuersignals dieses Schalters eine Zeitschaltung vorgesehen ist, die das genannte Signal während mindestens einer Teilbilddauer festhält.

2. Schaltkreis nach Anspruch 1, *dadurch gekennzeichnet*, daß die Verbindung mit der Video-Verarbeitungsstufe (4) mittels einer Drei-LeitungenVerbindung "rot, grün, blau" erfolgt, und daß jeder Schalter ein Dreifachschalter ist.

3. Schaltkreis nach einem der Ansprüche 1 oder 2, *dadurch gekennzeichnet*, daß die Zeitschaltung einen analogen R-C-Kreis mit Zeitkonstante (25, 26) aufweist.

4. Schaltkreis nach Anspruch 3, *dadurch gekennzeichnet*, daß die Zeitschaltung eine Lawinen-Halbleiterschaltung (23, 24) aufweist, deren Leitungszustand durch das Steuersignal (7) eingehalten und durch ein Teilbildsignal (16) beendet wird, wobei diese Halbleiterschaltung mit einer Zeitkonstantenschaltung (25, 26) in Reihe liegt, wobei die Zeitkonstante einer Teilbilddauer entspricht bzw. größer als dieselbe ist.

5. Schaltkreis nach einem der Ansprüche 1 oder 2, *dadurch gekennzeichnet*, daß die Zeitschaltung eine logische Schaltung (33, 34 oder 18 - 20), die das Steuersignal mindestens während einer Teilbilddauer festhält.

6. Schaltkreis nach Anspruch 5, *dadurch gekennzeichnet*, daß die logische Schaltung (33, 34 oder 18 - 20) ausgehend von Teilbildimpulsen (16) und von dem genannten entsprechenden Steuersignal (7) derart funktioniert, daß wenn wenigstens einmal während eines Teilbildes ein kurzes Steuersignal detektiert worden ist, dieses bis an das Ende des nächsten Teilbildes beibehalten wird.

7. Schaltkreis nach Anspruch 6, *dadurch gekennzeichnet*, daß die logische Schaltung einen Teilbild-Frequenz-Halbierer (18) aufweist, der an einem ersten Ausgang sowie an einem zweiten Ausgang wechselweise ein Teilbildsignal liefert, und daß diese zwei Ausgänge mit je einem Eingang einer bistabilen Triggerschaltung R-S (19, 20) gekoppelt sind, deren anderem Eingang das Steuersignal (7) zugeführt wird, wobei die Ausgänge dieser Triggerschaltungen R-S mit je einem Eingang einer logischen Torschaltung (21) verbunden sind, deren Ausgang das Steuersignal für den langsamen Umschalter liefert.

8. Schaltkreis nach Anspruch 6, *dadurch gekennzeichnet*, daß die logische Schaltung einen Teilbildimpuls-Zähler (33) aufweist, der durch das Steuersignal (7) auf Null rückgestellt wird, sowie eine bistabile Triggerschaltung R-S (34), deren einer Eingang mit dem Ausgang mit einem Gewicht von mindestens zwei des Zählers verbunden ist und deren anderer Eingang durch das Steuersignal erregt wird.

**Claims**

1. A circuit for rapidly switching, in a television set, of a main internal video source (1) and at least two further video sources (2, 3) to be connected to a video processing stage (4) providing the display of an image, comprising at least two change-over switches of which the first one (5) which directly feeds the video processing stage (4) is a the fast dual channel switching type, the first channel receiving the signal coming from the main video source (10) and the second channel receiving the signal coming from the second change-over switch (6), and whose switching action is controlled by means of several control signals, characterized in that the second change-over switch (6) is of the slow switching type having at least two channels, each one receiving a signal coming from one of the other video sources (2, 3) and that in the control signal path of this change-over switch a time delay circuit (9) is included which maintains this signal during at least one field period.

2. A circuit as claimed in Claim 1, characterized in that the connection to the video processing stage (4) is effected *via* three-wire links "red, green, blue" and in that each change-over switch is a tripple switch.

3. A circuit as claimed in one of the Claims 1 or 2, characterized in that the delay circuit includes an analog RC time constant circuit (25, 26).

4. A circuit as claimed in Claim 3, characterized in that the delay circuit includes an avalanche semiconductor array (23, 24) which is rendered conductive by the control signal (7) and is rendered non-conductive by a field signal (60), disposed in series with a circuit (25, 26) having a time constant, whose time constant is equal to or longer than a field period.

5. A circuit as claimed in one of the Claims 1 or 2, characterized in that the delay circuit includes a logic circuit (33, 34 or 18 – 20) which maintains the corresponding control signal during at least one field period.

6. A circuit as claimed in Claim 5, characterized in that the logic circuit (33, 34 or 18 - 20) operates on the basis of field pulses (16) and said corresponding control signal (7), in such a manner that when a brief control signal has been detected at least once in every field, it is maintained until the end of the subsequent field.

7. A circuit as claimed in Claim 6, characterized in that the logic circuit includes a divide-by-two divider (18) for dividing the field frequency producing a field signal alternately at a first output and at a second output, in that these two outputs are each connected to an input of a bistable multivibrator R-S (19, 20) whose other input is connected to the control signal (7), the outputs of these bistable multivibrators R-S being each connected to an input of a logic gate (21) whose output applies the control signal to the slow inverter.

8. A circuit as claimed in Claim 6, characterized in that the logic circuit includes a field pulse counter (33), which is reset to zero by the control signal (7), and a bistable multivibrator R-S (34) one input of which is connected to the counter output having a significance of at least two and the other input is activated by the control signal.

10
R
5
51A
51B
41 R
V
52A
52B
41 V
B
53A
53B
1
4
15
14
11
13
41 B
6
61
62
63
2
12
16
22
9
8
3
7
40

FIG.1

B
16
A
C
18
19
9
E
G
R
S
21
22
7
D
R
S
F
20

FIG. 2

33
A
16
CP
R
0
34
G
R
S
22
9
D
7

FIG. 3

FIG. 4

FIG. 5